(19) Europäisches Patentamt
European Patent Office
Office européen des brevets

(11) **EP 1 179 420 B1**

(12) **EUROPÄISCHE PATENTSCHRIFT**

(45) Veröffentlichungstag und Bekanntmachung des Hinweises auf die Patenterteilung:
**24.10.2007   Patentblatt 2007/43**

(51) Int Cl.:
**B32B 27/36** *(2006.01)*   **C08L 67/02** *(2006.01)*

(21) Anmeldenummer: **01117784.7**

(22) Anmeldetag: **02.08.2001**

(54) **Mindestens dreischichtige transparente Polyesterfolie, Verfahren zu ihrer Herstellung und ihre Verwendung**

Transparent polyester film having at least three layers, its use and process for its production

Film transparent en polyester comprenant au moins trois couches, son procédé de fabrication et son utilisation

(84) Benannte Vertragsstaaten:
**DE GB LU**

(30) Priorität: **11.08.2000   DE 10039366**

(43) Veröffentlichungstag der Anmeldung:
**13.02.2002   Patentblatt 2002/07**

(73) Patentinhaber: **Mitsubishi Polyester Film GmbH**
**65203 Wiesbaden (DE)**

(72) Erfinder:
• **Peiffer, Herbert, Prof. Dr.**
**55126 Mainz (DE)**

• **Hilkert, Gottfried, Dr.**
**55291 Saulheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 849 075      EP-A- 0 878 298**
**EP-A- 0 945 262**

**Beschreibung**

Die Erfindung betrifft eine transparente, biaxial orientierte Polyesterfolie mit einer Basisschicht B, die mindestens 80 Gew.-% thermoplastischen Polyester enthält, mindestens einer Zwischenschicht Z und mindestens einer Deckschicht A. Die Erfindung betrifft weiterhin ein Verfahren zur Herstellung der Folie und ihre Verwendung.

Stand der Technik

In der EP-A-0 878 297 wird eine transparente biaxial orientierte Polyesterfolie mit einer Basisschicht B beschrieben, die zu mindestens 80 Gew.-% aus einem thermoplastischen Polyester besteht und mindestens einer Deckschicht A, die aus einem Gemisch von Polymeren besteht, das mindestens 40 Gew.-% an Ethylen-2,6-naphthalat-Einheiten (PEN) und bis zu 40 Gew.-% an Ethylen-terephthalat-Einheiten (PET) und/oder bis zu 60 Gew.-% Einheiten aus cycloaliphatischen oder aromatischen Diolen und/oder Dicarbonsäuren enthält.

Enthält die Deckschicht A der Folie nach der EP-A-0 878 297 hohe Konzentrationen an Ethylen-2,6-naphthalat-Einheiten, so neigt die Folie zum Delaminieren zwischen der Deckschicht A und der Basisschicht B. Enthält die Deckschicht A dagegen niedrige Konzentrationen an Ethylen-2,6-naphthalat-Einheiten, so muss die Dicke dieser Schicht angehoben werden, um die gewünschte niedrige Sauerstoffpermeation von nicht mehr als 80 $cm^3/(m^2 \cdot bar \cdot d)$ zu erreichen.

Bei einer Folie gemäß Beispiel 8 der EP-A-0 878 297 wird in der Deckschicht A reines Polyethylen-2,6-naphthalat (entspricht 100 Gew.-% Ethylen-2,6-naphthalat-Einheiten) verwendet. In diesem Fall besteht so gut wie keine Haftung zwischen der Deckschicht A und der Basisschicht B. Die Folie ist für den praktischen Gebrauch (z. B. als Verbundfolie) ungeeignet, weil sich der Verbund auf Grund der geringen Haftung zwischen der Deckschicht A und der Basisschicht B der Polyesterfolie schon bei geringer mechanischer Belastung auflöst.

Bei einer Folie gemäß Beispiel 11 der EP-A-0 878 297 enthält die Deckschicht A 60 Gew.-% Ethylen-2,6-naphthalat-Einheiten. Um die geforderte niedrige Sauerstoffpermeation von kleiner als 80 $cm^3/(m^2 \cdot bar \cdot d)$ zu erreichen, muss die Dicke der Deckschicht A auf 3 $\mu$m angehoben werden, was wirtschaftlich ungünstig ist (teure Investition und hohe Materialkosten).

In der US-PS 5,795,528 wird ein coextrudiertes Folienlaminat beschrieben, das alternierende Schichten aus PEN und PET aufweist. Die Folie neigt wie diejenige nach der EP-A-0 878 297 zum Delaminieren zwischen den einzelnen Schichten aus PEN und PET. Zwischen diesen Schichten besteht so gut wie keine Haftung. Ein solches Laminat ist damit ebenfalls für die praktische Verwendung nicht geeignet.

Die EP 945 262 offenbart bereits eine transparente, biaxial orientierte Polyesterfolie mit einer Deckschicht, die mindestens 70 Ges.-% Ethylen-2,6-naphthalat-Einheiten enthält. Die Schrift beschreibt auch, dass die Folie eine geringe $O_2$-Permeation von weniger als 80 $cm^3/m^2 \cdot bar \cdot d$ besitzt und bedarfsweise eine Metallisierung umfassen kann.

Die EP 849 075 offenbart bereits eine Polyesterfolie mit einer Deckschicht aus Ethylen-2,6-naphthalat-Einheiten in einer Menge von 5 bis 95 Ges.-% und Ethylenterephthalat-Einheiten. Diese Folie eignet sich für Verpackungsanwendungen, vor allem dann, wenn es auf Siegelfähigkeit ankommt, aber auch als Prägefolie in Kombination mit einer Metallisierung, was dann zu besonders ästhetischen optischen Effekten führt.

Auch die EP 878 298 offenbart eine Polyesterfolie mit einer Deckschicht, die mindestens 65 Ges.-% Ethylen-2,6-naphthalat-Einheiten plus Ethylenterephthalat-Einheiten enthält. Sie beschreibt auch, dass die Folie eine hohe Sauerstoffbarriere besitzt und eine Metallisierung umfassen kann. Die Folien nach dem Stand der Technik lassen aber durch die Bank in Bezug auf die Haftfestigkeit der Schichten untereinander während der Verarbeitung in der Praxis zu Folienverpackungen noch zu wünschen übrig.

Aufgabe der vorliegenden Erfindung war es deshalb, eine transparente, biaxial orientierte Polyesterfolie zur Verfügung zu stellen, die den Nachteil der Folien aus dem Stand der Technik nicht mehr aufweist und sich insbesondere durch eine verbesserte Haftung zwischen den einzelnen Schichten auszeichnet. Sie soll einfach und preiswert herzustellen sein, gute Barriereeigenschaften aufweisen und keine Entsorgungsprobleme bereiten.

Gelöst wird die Aufgabe durch eine transparente, biaxial orientierte Polyesterfolie mit einer Basisschicht B, die mindestens 80 Gew.-% thermoplastischen Polyester enthält, mindestens einer Zwischenschicht Z und mindestens einer Deckschicht A, deren Kennzeichenmerkmale darin zu sehen sind, dass

- die Deckschicht A aus einem Polymer, einem Gemisch von Polymeren/Copolymeren oder aus einem Copolymeren besteht, das mindestens 85 Gew.-% an Ethylen-2,6-naphthalat-Einheiten und bis zu 15 Gew.-% an Ethylen-terephthalat-Einheiten und/oder bis zu 15 Gew.-% Einheiten aus cycloaliphatischen oder aromatischen Diolen und/oder Dicarbonsäuren enthält;
- die Zwischenschicht Z aus einem Gemisch von Polymeren/Copolymeren oder aus einem Copolymeren besteht, das mindestens 3 Gew.-% an Ethylen-2,6-naphthalat-Einheiten und bis zu 97 Gew.-% an Ethylen-terephthalat-Einheiten und/oder bis zu 97 % Einheiten aus cycloaliphatischen oder aromatischen Diolen und/oder Dicarbonsäuren enthält und

- der $T_g2$-Wert der Polyesterfolie über dem $T_g2$-Wert der Basisschicht B, aber unterhalb des $T_g2$-Wertes der Deckschicht A liegt
- sie eine Sauerstoffpermeation von weniger als 85 cm$^3$/(m$^2$·bar·d) aufweist und
- die Haftung zwischen den einzelnen Schichten mindestens 0.5 N/25 mm beträgt.

Die erfindungsgemäße Folie weist eine niedrige Sauerstoffpermeation von weniger als 85 cm$^3$/(m$^2$ · bar · d) und eine minimale Haftung (zwischen den einzelnen Schichten) von mehr als 0,5 N/25 mm auf.

Die erfindungsgemäße Folie ist mindestens dreischichtig aufgebaut. Sie besteht dann aus der Deckschicht A, einer Basisschicht B und einer zwischen der Deckschicht A und der Basisschicht B befindlichen Zwischenschicht Z.

Bevorzugt ist eine Polyesterfolie, bei der die Polymeren der Deckschicht A mindestens 90 Gew.-% an Ethylen-2,6-naphthalat-Einheiten und bis zu 10 Gew.-% an Ethylen-terephthalat-Einheiten enthalten. Davon ist wiederum eine solche Polyesterfolie besonders bevorzugt, bei der die Polymeren der Deckschicht A mindestens 92 Gew.-% an Ethylen-2,6-naphthalat-Einheiten und bis zu 8 Gew.-% an Ethylen-terephthalat-Einheiten enthalten. Die Deckschicht A kann jedoch auch vollständig aus Ethylen-2,6-naphthalat-Polymeren bestehen.

Weiterhin ist eine Polyesterfolie bevorzugt, bei der die Polymeren der Zwischenschicht Z mindestens 5 Gew.-% an Ethylen-2,6-naphthalat-Einheiten und bis zu 95 Gew.-% an Ethylen-terephthalat-Einheiten enthalten. Davon ist wiederum eine solche Polyesterfolie besonders bevorzugt, bei der die Polymeren der Zwischenschicht Z mindestens 7 Gew.-% an Ethylen-2,6-naphthalat-Einheiten und bis zu 93 Gew.-% an Ethylen-terephthalat-Einheiten enthalten.

Geeignete aliphatische Diole sind beispielsweise Diethylenglykol, Triethylenglykol, aliphatische Glykole der allgemeinen Formel HO-(CH$_2$)$_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-C$_6$H$_4$-X-C$_6$H$_4$-OH, wobei X für - CH$_2$-, -C(CH$_3$)$_2$-, -C(CF$_3$)$_2$-, -O-, -S- oder -SO$_2$- steht. Daneben sind auch Bisphenole der Formel HO-C$_6$H$_4$-C$_6$H$_4$-OH gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C$_3$-C$_{19}$)Alkandisäuren besonders geeignet, wobei der Alkanteil geradkettig oder verzweigt sein kann.

Die Basisschicht der Folie besteht bevorzugt zu mindestens 90 Gew.-% aus dem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel HO-(CH$_2$)$_n$-OH, wobei n eine ganze Zahl von 3 bis 6 darstellt, verzweigte aliphatische Glykole mit bis zu 6 KohlenstoffAtomen, aromatische Diole der allgemeinen Formel HO-C$_6$H$_4$-X-C$_6$H$_4$-OH, wobei X für -CH$_2$-, -C(CH$_3$)$_2$-, -C(CF$_3$)$_2$-, -O-, -S- oder -SO$_2$- steht, oder Bisphenole der allgemeinen Formel HO-C$_6$H$_4$-C$_6$H$_4$-OH eingesetzt werden.

Die Dicarbonsäure-Comonomereinheiten leiten sich bevorzugt ab von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere Cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder (C$_1$-C$_{16}$)Alkandicarbonsäuren, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Polymere/Copolymeren für die Deckschicht A und für die Zwischenschicht Z können auf drei verschiedene Weisen hergestellt werden:

a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.

b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.

c) PET und PEN werden als Granulat im gewünschten Verhältnis gemischt und die Mischung dem Extruder für die Deckschicht A und für die Zwischenschicht zugeführt. Hier findet die Umesterung zum Copolymer direkt während der Herstellung der Folie statt. Dieses Verfahren hat den Vorteil, dass es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymeren der Basisschicht B identisch mit denen der Deckschicht A und denen der Zwischenschicht Z. Diese werden der Basisschicht B entweder direkt bei der Extrusion beigemischt oder sind automatisch in der Folie durch Regeneratzugabe enthalten. Der Anteil dieser Copolymeren in der Basisschicht ist so gewählt, dass die Basisschicht kristallinen Charakter aufweist.

In einer weiteren vorteilhaften Ausführungsform umfaßt die Folie auf der der Deckschicht A abgewandten Seite zusätzlich eine weitere Deckschicht C aus Polyethylenterephthalat, die Pigmente enthält.

Die erfindungsgemäße Folie zeigt eine hohe Sauerstoffbarriere und eine hohe Haftung zwischen den einzelnen Schichten der erfindungsgemäßen Folie. Werden dagegen für die Deckschicht A Polymere verwendet, die weniger als 85 Gew.-% Ethylen-2,6-naphthalat-Einheiten und mehr als 15 Gew.-% Ethylen-terephthalat-Einheiten enthalten, dann ist die Folie zwar etwas weniger durchlässig für Sauerstoff als eine Standardpolyesterfolie (die zu 100 Gew.-% aus Polyethylenterephthalat besteht), die Durchlässigkeit ist jedoch noch immer viel zu hoch.

Werden für die Zwischenschicht Z Copolymere verwendet, die weniger als 3 Gew.-% Ethylen-2,6-naphthalat-Einheiten und mehr als 97 Gew.-% Ethylenterephthalat-Einheiten enthalten, dann ist die Adhäsion zwischen der Deckschicht A und der Zwischenschicht Z nicht mehr ausreichend. Die Folie neigt bei mechanischer Beanspruchung zum Delaminieren, was unerwünscht ist und zu einer nicht verwendbaren Folie führt.

Weiterhin zeichnen sich die erfindungsgemäßen Folien dadurch aus, dass die Glasübergangstemperatur $T_g$ des (Co)polymers bzw. der (Co)polymeren der Deckschicht A im Vergleich zum Stand der Technik höher liegt als die Glasübergangstemperatur $T_g$ der Polymeren für die Zwischenschicht Z und für die Basisschicht B. Die Glasübergangstemperatur $T_g$ der eingesetzten (Co)polymeren für die Deckschicht A liegt vorzugsweise im Bereich von 90 bis 120 ˚C. Bei der Bestimmung der Glasübergangstemperaturen $T_g$ mittels Differential Scanning Calorimetry (DSC) können die Übergänge der Schichten nicht unterschieden werden.

Glasübergänge, die beim ersten Aufheizvorgang an biaxial orientierten, wärmefixierten Folien bestimmt werden (im folgenden als $T_g1$ bezeichnet), sind durch die Kristallinität sowie die molekularen Spannungen im amorphen Anteil der Proben in ihrem Ausmaß relativ gering ausgeprägt, über einen breiten Temperaturbereich verteilt und zu höheren Temperaturen verschoben. Vor allem auf Grund von Orientierungseffekten eignen sie sich nicht zur Charakterisierung eines Polymers. Die Auflösung von DSC-Meßgeräten reicht oft nicht aus, um die wegen der Orientierung und Kristallinität kleinen und "verschmierten" Glasstufen im ersten Aufheizvorgang ($T_g1$) der einzelnen Schichten der erfindungsgemäßen Folie zu erfassen.

Wenn die Proben aufgeschmolzen und dann rasch wieder unter ihre Glasübergangstemperatur abgekühlt (abgeschreckt) werden, so werden die Orientierungseffekte eliminiert. Beim erneuten Aufheizen werden dann Glasübergänge (hier als $T_g2$ bezeichnet) gemessen, die eine höhere Intensität haben und charakteristisch sind für die jeweiligen Polymeren. Die Glasübergänge der einzelnen Schichten lassen sich allerdings auch hier nicht unterscheiden, weil sich die Schichten beim Aufschmelzen vermischen und die darin enthaltenen Polyester untereinander Umesterungsreaktionen eingehen. Es ist jedoch völlig ausreichend, die $T_g2$ der gesamten coextrudierten Folien mit der $T_g2$ des für die Basisschicht B verwendeten Polymers zu vergleichen. In bekannten Folien liegt der $T_g2$-Wert der Basisschicht höher als der $T_g2$-Wert der coextrudierten Folie, während der $T_g2$-Wert der Deckschicht niedriger liegt als der $T_g2$-Wert der Basisschicht und auch der $T_g2$-Wert der coextrudierten Folie. In der erfindungsgemäßen Folie ist dies gerade umgekehrt. Hier liegt der $T_g2$-Wert der coextrudierten Folie höher als der $T_g2$-Wert der Basisschicht B, aber unterhalb des $T_g2$-Werts der Deckschicht A.

Die Basisschicht B, die Zwischenschicht Z und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Zur Einstellung weiterer gewünschter Eigenschaften kann die Folie corona- bzw. flammvorbehandelt und/oder beschichtet sein. Typische Beschichtungen sind haftvermittelnde, antistatisch, schlupfverbessernd oder dehäsiv wirkende Schichten. Es bietet sich an, diese zusätzlichen Schichten über in-line coating mittels wässriger Dispersionen vor der Querverstreckung auf die Folie aufzubringen. Die Folie eignet sich daneben insbesondere für eine Metallisierung oder für eine Beschichtung mit keramischen Substanzen ($SiO_x$, $Al_2O_3$). Zu besonders guten Werten für die Sauerstoffbarriere gelangt man, wenn die Deckschicht A metallisiert oder keramisch beschichtet wird.

Die erfindungsgemäße Polyesterfolie enthält vorzugsweise noch eine zweite Deckschicht C. Aufbau, Dicke und Zusammensetzung der zweiten Deckschicht C können unabhängig von der bereits vorhandenen Deckschicht A gewählt werden, wobei die zweite Deckschicht C ebenfalls die bereits genannten Polymeren oder Polymermischungen enthalten kann, welche aber nicht mit der chemischen Zusammensetzung der Deckschicht A identisch sein müssen. Die zweite Deckschicht C kann auch andere gängige Deckschichtpolymere enthalten.

Zwischen der Basisschicht B und der Deckschicht A befindet sich die Zwischenschicht Z. Die Dicke der Zwischenschicht ist im allgemeinen größer als 0,1 $\mu$m und liegt bevorzugt im Bereich von 0,2 bis 20 $\mu$m und besonders bevorzugt im Bereich von 0,3 bis 10 $\mu$m.

Die Dicke der Deckschicht(en) ist im allgemeinen größer als 0,3 $\mu$m und liegt bevorzugt im Bereich von 0,4 bis 5 $\mu$m und besonders bevorzugt im Bereich von 0,5 bis 4 $\mu$m, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 100 $\mu$m, insbesondere 5 bis 50 $\mu$m, vorzugsweise 6 bis 30 $\mu$m, wobei die Basisschicht einen Anteil von vorzugsweise etwa 40 bis 90 % an der Gesamtdicke hat.

Gegenstand der vorliegenden Erfindung ist auch ein Verfahren zur Herstellung dieser Folie. Es umfasst

    a) Herstellen einer mehrschichtigen Folie aus einer Basisschicht B und Deckschicht(en) A und ggf. C durch Coextrusion;
    b) biaxiales Strecken der Folie und
    c) Thermofixieren der gestreckten Folie.

Zur Herstellung der Deckschicht A werden zweckmäßig Granulate aus Polyethylenterephthalat und Polyethylen-2,6-naphthalat im gewünschten Mischungsverhältnis direkt dem Extruder zugeführt. Die beiden Materialien lassen sich bei etwa 300 ˚C aufschmelzen und extrudieren. Unter diesen Bedingungen können im Extruder Umesterungsreaktionen ablaufen, bei denen sich Copolymere aus den jeweiligen Homopolymeren bilden.

Die Polymeren für die Basisschicht B werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) gestreckt. Dies führt zu einer Orientierung der Molekülketten innerhalb des Polyesters. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im allgemeinen wird die Streckung in Längsrichtung bei 80 bis 130 ˚C und die Querstreckung bei 90 bis 150 ˚C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur von 150 bis 250 ˚C gehalten. Anschließend wird die Folie in üblicher Weise aufgewickelt.

Von großem Vorteil bei diesem Verfahren ist, dass dem Extruder Granulate zu gegeben werden können, die die Maschine nicht verkleben.

Ein weiterer Vorteil besteht darin, dass die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, dass Verschnittmaterial, das bei der Folienherstellung im Betrieb immanent anfällt, als Regenerat in einer Menge von bis zu 60 Gew.-%, bevorzugt von 10 bis 50 Gew.-%, jeweils bezogen auf das Gesamtgewicht der Folie, wieder für die Folienherstellung verwendet werden kann, ohne dass dabei die physikalischen Eigenschaften der unter Hinzunahme von Regenerat hergestellten Folie nennenswert negativ beeinflusst werden.

Die erfindungsgemäße Folie eignet sich hervorragend zum Verpacken von Nahrungs- und Genußmitteln. Sie zeichnet sich durch hervorragende Barriereeigenschaften, insbesondere gegenüber Sauerstoff aus. Bei der Verarbeitung der Folie, z.B. zu Folienlaminaten, ist gewährleistet, dass die einzelnen Schichten der Folie zusammen haften bleiben und nicht delaminieren.

Außerdem konnte der Glanz und die Trübung der Folie gegenüber Folien nach dem Stand der Technik verbessert werden. Bei der Herstellung der Folie ist gewährleistet, dass das Regenerat in einer Konzentration bis zu 60 Gew.-%, bezogen auf das Gesamtgewicht der Folie, wieder der Extrusion zugeführt werden kann, ohne dass dabei die physikalischen Eigenschaften der Folie nennenswert negativ beeinflußt werden.

Die Folie eignet sich auf Grund ihres sehr guten Handlings und ihrer hervorragenden Verarbeitungseigenschaften insbesondere für die Verarbeitung auf schnelllaufenden Maschinen.

Die nachstehende Tabelle (Tabelle 1) fasst die wichtigsten erfindungsgemäßen Folieneigenschaften noch einmal plakativ auf einen Blick zusammen.

Tabelle 1

| | Erfindungsgemäßer Bereich | bevorzugt | besonders bevorzugt | Einheit | Messmethode |
|---|---|---|---|---|---|
| Deckschicht A | | | | | |
| Ethylen-2,6-naphthalat-Einheiten | > 85 | >90 | >92 | Gew.-% | |
| Ethylen-terephthalat-Einheiten | < 15 | <10 | <8 | Gew.-% | |
| Dicke | >0.3 | 0,4 bis 5,0 | 0,5 bis 4,0 | $\mu$m | |
| Zwischenschicht Z | | | | | |
| Ethylen-2,6-naphthalat-Einheiten | >3 | >5 | >7 | Gew.-% | |
| Ethylen-terephthalat-Einheiten | < 97 | < 95 | < 93 | Gew.-% | |
| Dicke | >0.1 | 0,2 bis 20,0 | 0,3 bis 10,0 | $\mu$m | |
| Folieneigenschaften | | | | | |
| Sauerstoffpermeation | < 80 | < 75 | < 70 | $cm^3/m^2 \cdot bar \cdot d)$ | DIN 53380, Teit 3 |
| Haftung zwischen den Schichten A und Z sowie Z und B | > 0,5 | > 0,7 | >1,0 | N/25mm | intern |

**Meßmethoden**

Zur Charakterisierung der Rohstoffe und der Folien wurden die folgenden Methoden benutzt:

*Sauerstoffdurchlässigkeit*

Die Messung der Sauerstoffbarriere erfolgte mit einem OX-TRAN 2/20 von Mocon Modern Controls (USA) entsprechend DIN 53 380, Teil 3.

*SV-Wert (standard viscosity)*

Die Standardviskosität SV (DCE) wird, angelehnt an DIN 53726, bei 25 ˚C in Dichloressigsäure gemessen. Die intrinsische Viskosität (IV) berechnet sich wie folgt aus der Standardviskosität

$$IV = [\eta] = 6{,}907 \cdot 10^{-4} \, SV \, (DCE) + 0{,}063096 \, [dl/g].$$

*Reibung*

Die Reibung wurde nach DIN 53 375 bestimmt. Die Gleitreibungszahl wurde 14 Tage nach der Produktion gemessen.

*Oberflächenspannung*

Die Oberflächenspannung wurde mit der sogenannten Tintenmethode (DIN 53 364) bestimmt.

*Trübung*

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4˚-Lochblende eine 1˚-Spaltblende eingesetzt wurde.

*Glanz*

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20˚ oder 60˚ eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

*Glasübergangstemperaturen*

Die Glasübergangstemperaturen $T_g 1$ und $T_g 2$ wurden anhand von Folienproben mit Hilfe der DSC (Differential Scanning Calorimetry) bestimmt. Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang $T_g 1$ ermittelt. Die Proben zeigten vielfach eine Enthalpierelaxation (ein Peak) zu Beginn des stufenförmigen Glasübergangs. Als $T_g 1$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet. Möglicherweise überdeckten die peakförmigen Enthalpierelaxationen die Feinstruktur der Stufe oder die Auflösung des Gerätes war für eine Auftrennung der kleinen, "verschmierten" Übergänge von orientierten, kristallinen Proben nicht ausreichend. Um die thermische Vorgeschichte zu eliminieren, wurden die Proben nach dem Aufheizen 5 Minuten bei 300˚C gehalten und dann anschließend mit flüssigem Stickstoff abgeschreckt. Aus dem Thermogramm für das zweite Aufheizen wurde die Temperatur für den Glasübergang $T_g 2$ als die Temperatur bei halber Stufenhöhe entnommen.

*Haftung zwischen den Schichten*

Das Folienmuster (300 mm längs x 180 mm quer) gemäß der vorliegenden Erfindung wird vor dem Verkleben auf einen glatten Karton (200 mm längs x 180 mm quer; ca. 400 g/m$^2$, gebleicht, Außenlagen gestrichen) gelegt, die überstehenden Folienenden sind auf die Rückseite umzuschlagen und mit Klebeband zu fixieren.

Die Verklebung der Folie gemäß der vorliegenden Erfindung mit einer Standardpolyesterfolie von 12 µm Dicke (z.B. Melinex 800) erfolgt mit einem Rakelgerät und Rakelstab Nr. 3 der Fa. Erichsen, wobei ca. 1,5 ml Klebstoff (Novacote NC 275+CA 12; Mischverhältnis: 4/1+ 7 Teile Ethylacetat) auf die Deckschicht A der Folie gemäß der vorliegenden Erfindung aufgetragen wird. Nach dem Auslüften des Lösemittels wird die Standardpolyesterfolie mit einer Metallrolle (Breite 200 mm, Durchmesser 90 mm, Masse 10 kg, nach DIN EN 20 535) auf die Deckschicht A der Folie gemäß der vorliegenden Erfindung aufkaschiert. Die Parameter der Kaschierung sind:

| | |
|---|---|
| Klebstoffmenge: | 5 +/-1 g/m$^2$ |
| Lüften nach Auftrag des Klebers: | 4 min +/-15 s |
| Rakelstärke (Erichsen): | 3 |
| Geschwindigkeitsstufe des Rakels: | ca. 133 mm/s |
| Aushärtzeit des Verbundes: | 2 h bei 70 ˚C in einem Umluftofen |

Mit einem 25 ± 1 mm Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigem Klebeband mit der Rückseite der Folie gemäß der vorliegenden Erfindung (Basisschicht B oder Deckschicht C) vollflächig auf einem Trägerblech zu fixieren. Die Platte mit dem aufgeklebten Verbund ist in die untere Spannbacke der Zugprüfmaschine einzuspannen. Der Klemmabstand beträgt 100 mm. Das nicht kaschierte Ende der Standard-Polyesterfolie ist so in die obere Spannbacke der Zugprüfmaschine (z.B. Instron, Zwick) einzuspannen, dass sich ein Schälwinkel von 180 ˚ ergibt. Angegeben wird die mittlere Schälkraft in N/25 mm gerundet auf eine Nachkommastelle.

| | |
|---|---|
| Probenbreite | 25 mm |
| Vorkraft: | 0,1 N |
| Messlänge: | 25 mm |
| Abzugsgeschwindigkeit bis Vorkraft: | 25 mm/min |
| Vorweg: | 5 mm |
| Prüfweg: | 40 mm |
| Empfindlichkeit: | 0,01 N |
| Abzugsgeschwindigkeit: | 100 mm/min |

Das Messergebnis für die Schälkraft ist gleichzusetzen mit der minimalen Haftkraft zwischen den Schichten, da die Haftkraft zwischen dem Kleber und der Standardfolie deutlich größer ist. Eine Schichtablösung der Deckschicht A von der Basisschicht B der Folie gemäß der vorliegenden Erfindung kann beispielsweise mittels UV-Lampe nachgewiesen werden. Befindet sich auf dem Kleber Copolymeres aus PEN und PET, so leuchtet bei Bestrahlung dieser Schicht mittels UV Lampe das UV-Licht bläulich auf.

**Beispiele**

Die nachfolgenden Ausführungsbeispiele illustrieren die Erfindung für den Fachmann noch deutlicher. Die darin verwendeten Produkte (Warenzeichen und Herstellerfirma) sind jeweils nur einmal angegeben und beziehen sich dann auch auf die folgenden Beispiele.

Beispiel 1

Chips aus Polyethylenterephthalat und Polyethylen-2,6-naphthalat wurden in einem Mischungsverhältnis von 2 : 98 bei einer Temperatur von 160 ˚C auf eine Restfeuchte von weniger als100 ppm getrocknet und dem Extruder für die Deckschicht A zugeführt.

Weiter wurden Chips aus PET und PEN in einem Gewichtsverhältnis von 30 : 70 ebenfalls bei 160 ˚C auf eine Restfeuchte von weniger als 100 ppm getrocknet und dem Extruder für die Zwischenschicht Z zugeführt.

Chips aus Polyethylenterephthalat wurden bei einer Temperatur von 160 ˚C auf eine Restfeuchte von weniger als 100 ppm getrocknet und dem Extruder für die Basisschicht B zugeführt.

In den jeweiligen Extrudern wurden die Materialien bei etwa 300 ˚C extrudiert. Die Schmelzen wurden filtriert, in einer Mehrschichtdüse zu einem Flachfilm ausgeformt und dann als Deckschicht A, Zwischenschicht Z und Basisschicht B überlagert. Der Mehrschichtfilm aus den Schichten A, Z und B wurde über die Düsenlippe ausgestoßen und auf einer Kühlwalze aus poliertem Edelstahl verfestigt. Die Verweilzeit der Polymeren für die Deckschicht A und für die Zwischenschicht Z in der Extrusion betrug ca. 5 min. Es entstand ein Copolymer in der Extrusion bei den angegebenen Bedingungen.

Durch Coextrusion und anschließende stufenweise Orientierung in Längs- und Querrichtung wurde eine transparente dreischichtige Folie AZB mit einer Gesamtdicke von 12 $\mu$m hergestellt. Die Deckschicht A hatte eine Dicke von 1,0 $\mu$m und die Zwischenschicht Z eine Dicke von 2 $\mu$m.

Deckschicht A:

| 98 Gew.-% | Polyethylen-2,6-naphthalat (®Polyclear P 100 Prepolymer von KOSA/Offenbach) mit einem SV-Wert von 600, |
| 2 Gew.-% | Polyethylenterephthalat mit einem SV-Wert von 800. |

Zwischenschicht Z:

| 70 Gew.-% | Polyethylen-2,6-naphthalat (®Polyclear P 100 Prepolymer von KOSA/Offenbach) mit einem SV-Wert von 600, |
| 30 Gew.-% | Polyethylenterephthalat mit einem SV-Wert von 800. |

Basisschicht B:

| 80 Gew.-% | Polyethylenterephthalat (4020 von KOSA/Offenbach) mit einem SV-Wert von 800 und |
| 20 Gew.-% | Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 $\mu$m. |

Die einzelnen Verfahrensschritte waren:

| Extrusion | Temperaturen: | Deckschicht A: | 300 ˚C |
| | | Zwischenschicht Z: | 300 ˚C |
| | | Basisschicht B: | 300 ˚C |
| | Temperatur der Abzugswalze | | 30 ˚C |
| Längsstreckung | Temperatur: | | 122 ˚C |
| | Längsstreckverhältnis | | 4,5 : 1 |
| Querstreckung | Temperatur: | | 125 ˚C |
| | Querstreckverhältnis: | | 4,0 : 1 |
| Fixierung | Temperatur: | | 230 ˚C |

Die Folie hatte die geforderte Sauerstoffbarriere und die geforderte Haftung.

Beispiel 2

Wie in Beispiel 1 wurde durch Coextrusion eine vierschichtige Folie AZBC mit einer Gesamtdicke von 12 $\mu$m hergestellt. Die Deckschicht A hatte eine Dicke von 1,5 $\mu$m, die Zwischenschicht Z eine Dicke von 2 $\mu$m und die Deckschicht C eine Dicke von 1,0 $\mu$m.

Deckschicht A:

100 Gew.-%    Polyethylen-2,6-naphthalat (®Polyclear P 100 Prepolymer von KOSA/Offenbach) mit einem SV-Wert von 600,

Zwischenschicht Z:

50 Gew.-%    Polyethylen-2,6-naphthalat (®Polyclear P 100 Prepolymer von KOSA/Offenbach) mit einem SV-Wert von 600,
50 Gew.-%    Polyethylenterephthalat mit einem SV-Wert von 800.

Basisschicht B:

100 Gew.-%    Polyethylenterephthalat (4020 von KOSA/Offenbach) mit einem SV-Wert von 800 und

Deckschicht C:

80 Gew.-%    Polyethylenterephthalat mit einem SV-Wert von 800 und
20 Gew.-%    Masterbatch aus 99,0 Gew.-% Polyethylenterephthalat und 1,0 Gew.-% Kieselsäurepartikel, die zu 50 % eine mittlere Teilchengröße von 2,5 $\mu$m und zu 50 % eine mittlere Teilchengröße von 1,0 $\mu$m hatten.

Die Verfahrensbedingungen waren für alle Schichten wie im Beispiel 1.

Vergleichsbeispiel V1

Es wurde eine Folie entsprechend Beispiel 8 der EP-A-0 878 297 hergestellt. Die Folie hatte die geforderte Sauerstoffbarriere, die Haftung zwischen den Schichten A und B war jedoch äußerst gering.

Vergleichsbeispiel VB2

Es wurde eine Folie entsprechend Beispiel 1 der US-PS 5,795,528 hergestellt. Im Vergleich zum Beispiel aus der US-PS wurden jedoch nur 2 Schichten aus PEN und PET gewählt. Die Folie hatte die geforderte Sauerstoffbarriere, die Haftung zwischen den Schichten A und B war jedoch äußerst gering.
Die Eigenschaften der gemäß den Beispielen 1 und 2 und den Vergleichsbeispielen VB1 und VB2 hergestellten Folien sind in Tabelle 3 zusammengestellt.

Tabelle 2

| Beispiel Nr. | Ethylen-2,6-naphthalat-Einheiten in der Deckschicht A (in Gew.-%) | Ethylenterephthalat-Einheiten in der Deckschicht A (in Gew.-%) | Ethylen-2,6-naphthalat-Einheiten in der Zwischenschicht Z (in Gew.-%) | Ethylenterephthalat-Einheiten in der Zwischenschicht Z (in Gew.-%) |
|---|---|---|---|---|
| 1 | 98 | 2 | 70 | 30 |
| 2 | 100 | 0 | 50 | 50 |
| V 1 | 100 | 0 | | 0 |
| V2 | 100 | 0 | | 0 |

Tabelle 3

| Beispiel Nr. | Foliendicke ($\mu$m) | Schichtdicken A/Z/B/C ($\mu$m) | Folienaufbau | Sauerstoff-Permeation ($cm^3/m^2$ bar d) | Haftung zwischen den Schichten N/25 mm | Glanz (20° Meßwinkel) A-Seite C-Seite | | Trübung |
|---|---|---|---|---|---|---|---|---|
| 1 | 12 | 1,0/2,0/9,0 | AZB | 72 | 1,8 | 200 | 175 | 1,8 |
| 2 | 12 | 1,5/2,0/7,5/1,0 | AZBC | 68 | 2,3 | 195 | 180 | 1,9 |
| V1 | 12 | 3,0/7,5/1,5 | ABC | 50 | 0,1 | 203 | 175 | 1,8 |
| V 2 | 12 | 6,0/6,0 | AB | 45 | 0,1 | 200 | 195 | 2,0 |

**Patentansprüche**

1.  Transparente, biaxial orientierte Polyesterfolie mit einer Basisschicht B, die mindestens 80 Gew.-% thermoplastischen Polyester enthält, mindestens einer Zwischenschicht Z und mindestens einer Deckschicht A, **dadurch gekennzeichnet, dass**

    - die Deckschicht A aus einem Polymer, einem Gemisch von Polymeren/Copolymeren oder einem Copolymeren besteht, das mindestens 85 Gew.-% an Ethylen-2,6-naphthalat-Einheiten und bis zu 15 Gew.-% an Ethylenterephthalat-Einheiten und/oder bis zu 15 Gew.-% Einheiten aus cycloaliphatischen oder aromatischen Diolen und/oder Dicarbonsäuren enthält;
    - die Zwischenschicht Z aus einem Polymer, einem Gemisch von Polymeren/Copolymeren oder einem Copolymeren besteht, das mindestens 3 Gew.-% an Ethylen-2,6-naphthalat-Einheiten und bis zu 97 Gew.-% an Ethylen-terephthalat-Einheiten und/oder bis zu 97 Gew.-% Einheiten aus cycloaliphatischen oder aromatischen Diolen und/oder Dicarbonsäuren enthält;
    - der $T_g2$-Wert der Polyesterfolie über dem $T_g2$-Wert der Basisschicht B, aber unterhalb des $T_g2$-Wertes der Deckschicht A liegt;
    - sie eine Sauerstoffpermeation von weniger als 85 cm$^3$/(m$^2$.bar.d) aufweist und
    - die Haftung zwischen den einzelnen Schichten mindestens 0,5 N/25 mm beträgt.

2.  Folie gemäß Anspruch 1, **dadurch gekennzeichnet, dass** die Deckschicht A mindestens 90 Gew.-%, bevorzugt mindestens 92 Gew.-%, an Ethylen-2,6-naphthalat-Einheiten enthält.

3.  Folie gemäß Anspruch 1 oder 2, **dadurch gekennzeichnet, dass** die Zwischenschicht Z mindestens 5 Gew.-%, bevorzugt mindestens 7 Gew.-%, an Ethylen-2,6-naphthalat-Einheiten enthält.

4.  Folie gemäß Anspruch 1 bis 3, **dadurch gekennzeichnet, dass** sie eine Sauerstoffpermeation von weniger als 80 cm$^3$/(m$^2$· bar · d), bevorzugt weniger als 75 cm$^3$/(m$^2$· bar · d), aufweist.

5.  Folie gemäß einem oder mehreren der Ansprüche 1 bis 4, **dadurch gekennzeichnet, dass** die Haftung zwischen den einzelnen Schichten größer/gleich 0,7 N/25 mm, bevorzugt größer/gleich 1,0 N/25 mm.

6.  Folie gemäß einem oder mehreren der Ansprüche 1 bis 5, **dadurch gekennzeichnet, dass** die Deckschicht A eine Dicke von größer als 0,3 $\mu$m, vorzugsweise von 0,4 bis 5,0 $\mu$m, besonders bevorzugt von 0,5 bis 4,0 $\mu$m, aufweist.

7.  Folie gemäß einem oder mehreren der Ansprüche 1 bis 6, **dadurch gekennzeichnet, dass** die Zwischenschicht Z eine Dicke von größer als 0,1 $\mu$m, vorzugsweise von 0,2 bis 20,0 $\mu$m, besonders bevorzugt von 0,3 bis 10,0 $\mu$m, aufweist.

8.  Folie gemäß einem oder mehreren der Ansprüche 1 bis 7, **dadurch gekennzeichnet, dass** sie vierschichtig ist und eine zusätzliche Deckschicht C, die darauf angeordnete Basisschicht B, die darauf angeordnete Zwischenschicht Z und die darauf angeordnete Deckschicht A enthält.

9.  Folie gemäß einem oder mehreren der Ansprüche 1 bis 8, **dadurch gekennzeichnet, dass** mindestens eine der Deckschichten pigmentiert ist.

10. Folie gemäß einem oder mehreren der Ansprüche 1 bis 9, **dadurch gekennzeichnet, dass** sie auf mindestens einer Seite mit einer Corona behandelt ist.

11. Folie gemäß einem oder mehreren der Ansprüche 1 bis 10, **dadurch gekennzeichnet, dass** sie auf mindestens einer Seite in-line beschichtet ist.

12. Folie gemäß einem oder mehreren der Ansprüche 1 bis 11, **dadurch gekennzeichnet, dass** sie auf mindestens auf der Deckschicht A metallisiert oder keramisch beschichtet ist.

13. Verfahren zur Herstellung der Folie nach einem oder mehreren der Ansprüche 1 bis 12, umfassend die Schritte

    - Herstellen einer Folie aus Basisschicht B, Zwischenschicht Z und Deckschicht(en) durch Koextrusion,
    - biaxiales Strecken der Folie und

- Thermofixieren der gestreckten Folie,

**dadurch gekennzeichnet, dass** das Strecken der Folie in Längsrichtung bei einer Temperatur im Bereich von 80 bis 130 ˚C und die Querstreckung im Bereich von 90 bis 150 ˚C durchgeführt wird und dass das Längsstreckverhältnis im Bereich von 2,5:1 bis 6:1 liegt, bevorzugt von 3:1 bis 5,5:1, und das Querstreckverhältnis im Bereich von 3,0:1 bis 5,0:1, bevorzugt von 3,5:1 bis 4,5:1.

14. Verfahren nach Anspruch 13, **dadurch gekennzeichnet, dass** die gestreckte Folie zur Thermofixierung über eine Zeitdauer von etwa 0,1 bis 10 s bei einer Temperatur von 150 bis 250 ˚C gehalten wird.

15. Verfahren nach Anspruch 13 oder 14, **dadurch gekennzeichnet, dass** Verschnittmaterial, das bei der Folienherstellung anfällt, als Regenerat in einer Menge von bis zu 60 Gew.-%, bevorzugt 10 bis 50 Gew.-%, jeweils bezogen auf das Gesamtgewicht der Folie, wieder für die Folienherstellung verwendet wird.

16. Verwendung der Folie nach einem oder mehreren der Ansprüche 1 bis 12 zum Verpacken von Nahrungs- und Genußmitteln.

**Claims**

1. A transparent, biaxially oriented polyester film with a base layer B, which comprises at least 80 % by weight of thermoplastic polyester, and with at least one intermediate layer Z, and with at least one outer layer A, wherein

   - the outer layer A is composed of a polymer, of a mixture of polymers/copolymers, or of a copolymer, which contains at least 85 % by weight of ethylene 2,6-naphthalate units and up to 15 % by weight of ethylene terephthalate units, and/or up to 15 % by weight of units derived from cycloaliphatic or aromatic diols and/or dicarboxylic acids;
   - the intermediate layer Z is composed of a polymer, of a mixture of polymers/copolymers, or of a copolymer, which contains at least 3 % by weight of ethylene 2,6-naphthalate units, and up to 97 % by weight of ethylene terephthalate units, and/or up to 97 % by weight of units derived from cycloaliphatic or aromatic diols and/or dicarboxylic acids;
   - the $T_g2$ value of the polyester film is above the $T_g2$ value of the base layer B but below the $T_g2$ value of the outer layer A;
   - the oxygen permeation of the film is below 85 $cm^3/(m^2 \cdot bar \cdot d)$ and
   - the adhesion between the individual layers is at least 0.5 N/25mm.

2. The film as claimed in claim 1, wherein the outer layer A contains at least 90 % by weight, preferably at least 92 % by weight, of ethylene 2,6-naphthalate units.

3. The film as claimed in claim 1 or 2, wherein the intermediate layer Z contains at least 5 % by weight, preferably at least 7 % by weight, of ethylene 2,6-naphthalate units.

4. The film as claimed in any of claims 1 to 3, wherein the oxygen permeation of the film is below 80 $cm^3/(m^2 \cdot bar \cdot d)$, preferably below 75 $cm^3/(m^2 \cdot bar \cdot d)$.

5. The film as claimed in one or more of claims 1 to 4, wherein the adhesion between the individual layers is greater than or equal to 0.7 N/25 mm, preferably greater than or equal to 1.0 N/25 mm.

6. The film as claimed in one or more of claims 1 to 5, wherein the outer layer A has a thickness above 0.3 $\mu$m, preferably from 0.4 to 5.0 $\mu$m, particularly preferably from 0.5 to 4.0 $\mu$m.

7. The film as claimed in one or more of claims 1 to 6, wherein the intermediate layer Z has a thickness above 0.1 $\mu$m, preferably from 0.2 to 20.0 $\mu$m, particularly preferably from 0.3 to 10.0 $\mu$m.

8. The film as claimed in one or more of claims 1 to 7, which has four layers and comprises an additional outer layer C, arranged thereupon the base layer B, and arranged thereupon the intermediate layer Z, and arranged thereupon the outer layer A.

9. The film as claimed in one or more of claims 1 to 8, wherein at least one of the outer layers has been pigmented.

10. The film as claimed in one or more of claims 1 to 9, wherein at least one side of the film has been corona-treated.

11. The film as claimed in one or more of claims 1 to 10, wherein at least one side of the film has been in-line coated.

12. The film as claimed in one or more of claims 1 to 11, which, at least on the outer layer A, has been metallized or ceramic-coated.

13. A process for producing the film as claimed in one or more of claims 1 to 12 encompassing the steps

    - producing a film from base layer B, intermediate layer Z, and outer layer(s) by coextrusion ,
    - biaxially stretching the film, and
    - heat-setting the stretched film,

    which comprises carrying out the longitudinal stretching of the film at a temperature in the range from 80 to 130 ˚C and carrying out transverse stretching in the range from 90 to 150 ˚C and using a longitudinal stretching ratio in the range from 2.5:1 to 6:1, preferably from 3:1 to 5.5:1 and using a transverse stretching ratio in the range from 3.0:1 to 5.0:1, preferably from 3.5:1 to 4.5:1.

14. The process as claimed in claim 13, wherein, for heat-setting, the stretched film is held for a period of from about 0.1 to 10 s at a temperature of from 150 to 250 ˚C.

15. The process as claimed in claim 13 or 14, wherein cut material arising during film production is reused as regrind in the film production in amounts of up to 60 % by weight, preferably from 10 to 50 % by weight, based in each case on the total weight of the film.

16. The use of the film as claimed in one or more of the claims 1 to 12 for packaging foods or other consumables.

**Revendications**

1. Film de polyester transparent, orienté biaxialement, comportant une couche de base B qui contient au moins 80 % en poids de polyester thermoplastique, au moins une couche intermédiaire Z et au moins une couche de recouvrement A, **caractérisé en ce que**

    - la couche de recouvrement A est constituée d'un polymère, d'un mélange de polymères/copolymères ou d'un copolymère, qui contient au moins 85 % en poids de motifs éthylène-2,6-naphtalate et jusqu'à 15 % en poids de motifs éthylène-téréphtalate et/ou jusqu'à 15 % en poids de motifs consistant en diols cycloaliphatiques ou aromatiques et/ou en acides dicarboxyliques ;
    - la couche intermédiaire Z est constituée d'un polymère, d'un mélange de polymères/copolymères ou d'un copolymère, qui contient au moins 3 % en poids de motifs éthylène-2,6-naphtalate et jusqu'à 97 % en poids de motifs éthylène-téréphtalate et/ou jusqu'à 97 % en poids de motifs consistant en diols cycloaliphatiques ou aromatiques et/ou en acides dicarboxyliques ;
    - la valeur $T_g2$ du film de polyester est supérieure à la valeur $T_g2$ de la couche de base B, mais inférieure à la valeur $T_g2$ de la couche de recouvrement A ;
    - il présente une perméation de l'oxygène de moins de 85 cm$^3$/(m$^2$.bar.d et
    - l'adhérence entre les couches individuelles est d'au moins 0,5 N/25 mm.

2. Film selon la revendication 1, **caractérisé en ce que** la couche de recouvrement A contient au moins 90 % en poids, de préférence au moins 92 % en poids de motifs éthylène-2,6-naphtalate.

3. Film selon la revendication 1 ou 2, **caractérisé en ce que** la couche intermédiaire Z contient au moins 5 % en poids, de préférence au moins 7 % en poids de motifs éthylène-2,6-naphtalate.

4. Film selon l'une quelconque des revendications 1 à 3, **caractérisé en ce qu'**il présente une perméation de l'oxygène de moins de 80 cm$^3$/(m$^2$.bar.d), de préférence de moins de 75 cm$^3$/(m$^2$.bar.d).

**5.** Film selon une ou plusieurs des revendications 1 à 4, **caractérisé en ce que** l'adhérence entre les couches individuelles est supérieure ou égale à 0,7 N/25 mm, de préférence supérieure ou égale à 1,0 N/25 mm.

**6.** Film selon une ou plusieurs des revendications 1 à 5, **caractérisé en ce que** la couche de recouvrement A a une épaisseur de plus de 0,3 $\mu$m, de préférence de 0,4 à 5,0 $\mu$m, de façon particulièrement préférée de 0,5 à 4,0 $\mu$m.

**7.** Film selon une ou plusieurs des revendications 1 à 6, **caractérisé en ce que** la couche intermédiaire Z a une épaisseur de plus de 0,1 $\mu$m, de préférence de 0,2 à 20,0 $\mu$m, de façon particulièrement préférée de 0,3 à 10,0 $\mu$m.

**8.** Film selon une ou plusieurs des revendications 1 à 7, **caractérisé en ce qu'**il est tétracouche et comporte une couche de recouvrement supplémentaire C, la couche de base B disposée sur celle-ci, la couche intermédiaire Z disposée sur celle-ci et la couche de recouvrement A disposée sur celle-ci.

**9.** Film selon une ou plusieurs des revendications 1 à 8, **caractérisé en ce qu'**au moins une des couches de recouvrement est pigmentée.

**10.** Film selon une ou plusieurs des revendications 1 à 9, **caractérisé en ce qu'**il est traité par une corona sur au moins une face.

**11.** Film selon une ou plusieurs des revendications 1 à 10, **caractérisé en ce qu'**il est revêtu en ligne sur au moins une face.

**12.** Film selon une ou plusieurs des revendications 1 à 11, **caractérisé en ce qu'**il est métallisé ou porte un revêtement céramique sur au moins la couche de recouvrement A.

**13.** Procédé pour la fabrication du film selon une ou plusieurs des revendications 1 à 12, comprenant les étapes suivantes

- production par coextrusion d'un film constitué de couche de base B, couche intermédiaire Z et couche(s) de recouvrement,
- étirage biaxial du film et
- thermofixage du film étiré,

**caractérisé en ce que** l'étirage du film dans le sens longitudinal est effectué à une température dans la plage de 80 à 130 °C et l'étirage transversal est effectué dans la plage de 90 à 150°C et **en ce que** le rapport d'étirage longitudinal se situe dans la plage allant de 2,5:1 à 6:1, de préférence de 3:1 à 5,5:1, et le rapport d'étirage transversal se situe dans la plage allant de 3,0:1 à 5,0:1, de préférence de 3,5:1 à 4,5:1.

**14.** Procédé selon la revendication 13, **caractérisé en ce que** le film étiré est maintenu pour le thermofixage à une température de 150 à 250 °C pendant une durée d'environ 0,1 à 10 secondes.

**15.** Procédé selon la revendication 13 ou 14, **caractérisé en ce que** le matériau de chute qui est produit lors de la fabrication du film est réutilisé en tant que produit de régénération en une quantité allant jusqu'à 60 % en poids, de préférence de 10 à 50 % en poids, chaque fois par rapport au poids total du film, pour la fabrication du film.

**16.** Utilisation du film selon une ou plusieurs des revendications 1 à 12, pour le conditionnement de produits alimentaires et autres produits de consommation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0878297 A
- US 5795528 A
- EP 945262 A
- EP 849075 A
- EP 878298 A
- EP 0602964 A